# EUROPÄISCHE PATENTSCHRIFT

(11) **EP 0 889 791 B1**
(45) Veröffentlichungstag und Bekanntmachung des Hinweises auf die Patenterteilung: **16.08.2001**
(21) Anmeldenummer: 97918100.5
(22) Anmeldetag: 02.04.1997
(51) Int. Cl.: B60D 1/52

(54) **ANHÄNGEVORRICHTUNG**
TOWING DEVICE
DISPOSITIF TRACTE

(30) Priorität: 04.04.1996 DE 19613429
(43) Veröffentlichungstag der Anmeldung: 13.01.1999
(73) Patentinhaber: ORIS FAHRZEUGTEILE HANS RIEHLE GmbH, 71696 Möglingen (DE)
(72) Erfinder: RIEHLE, Jörg, D-70439 Stuttgart (DE); BALLMANN, Thomas, D-71696 Möglingen (DE); PENTEKER, Thomas, D-71696 Möglingen (DE); ZIEGLER, Thomas, D-71706 Markgröningen (DE)
(74) Vertreter: Beck, Jürgen, Dr. Dipl.-Phys.
(86) Internationale Anmeldenummer: EP9701656
(87) Internationale Veröffentlichungsnummer: WO9737863

(56) Entgegenhaltungen:
- EP-A- 0 047 961
- EP-A- 0 455 251
- EP-A- 0 533 270
- DE-U- 8 703 875

## Beschreibung

Die Erfindung betrifft eine Anhängevorrichtung für Kraftfahrzeuge, insbesondere für Personenkraftfahrzeuge, umfassend ein am Heck des Kraftfahrzeugs befestigbares Aufnahmeteil, welches als Aufnahmehülse ausgebildet ist, einen eine Kupplungskugel tragenden Kugelhals, welcher mit einem in der quer zur Zugrichtung verlaufenden Einsteckrichtung in die Aufnahmehülse einsetzbaren Endstück versehen ist, wobei die Aufnahmehülse und der Kugelhals mit zusammenwirkenden Formschlußelementen versehen sind, die durch die Bewegung in Einsteckrichtung in Eingriff bringbar sind und in dieser Stellung für den Kugelhals in Einsteckrichtung einen Anschlag und eine zweite Querführung bilden, und eine Fixiereinrichtung, mit welcher der Kugelhals an dem Aufnahmeteil lösbar fixierbar ist, und welche ein zwischen einer den Kugelhals freigebenden Stellung und einer den Kugelhals an dem Aufnahmeteil fixierenden Stellung bewegbares Fixierelement aufweist.

Eine Anhängevorrichtung gemäß dem Oberbegriff des Anspruchs 1 ist z.B. aus der EP 0 047 961 A1 bekannt.

Der Nachteil dieser bekannten Anhängevorrichtung ist darin zu sehen, daß bei dieser zum spielfreien Fixieren des Endstücks im Aufnahmeteil eine in einer Zusätzlichen Längsbohrung des Kugelhelses aufgenommene Zugstange und ein zusätzliches Tellerfederpaket erforderlich sind, welches durch Bewegen der Zugstange von der gelösten Stellung in die Fixierstellung spannbar ist.

Der Erfindung liegt daher die Aufgabe zugrunde, eine Anhängevorrichtung der gattungsgemäßen Art derart zu verbessern, daß diese möglichst einfach und stabil ausgebildet ist und sich im Lauf des Betriebs möglichst kein oder nur unwesentliches Spiel im Bereich der lösbaren Befestigung des Kugelhalses an dem Aufnahmeteil einstellt.

Diese Aufgabe wird bei einer Anhängevorrichtung der eingangs beschriebenen Art durch die Merkmale des Kennzeichens des Anspruchs 1 gelöst. Das Fixierelement ist durch einen Kniehebelmechanismus zwischen der den Kugelhals freigebenden und der den Kugelhals am Aufnahmeteil fixierenden Stellung bewegbar, der Kniehebelmechanismus umfaßt in ihrer Längsrichtung federelastisch ausgebildete Zugstangen und mittels der federelastisch ausgebildeten Zugstangen mit dem Fixierelement und dem Kniehebelmechnismus ist in der verriegelten Stellung eine parallel zur Einsteckrichtung gerichtete elastische Kraftkomponente erzeugbar, welche die Formschlußelemente in Anlage hält.

Der Vorteil der erfindungsgemäßen Lösung ist damit darin zu sehen, daß einerseits durch das Vorsehen der Formschlußelemente in einfacher Weise eine spielfreie Verbindung zwischen Kugelhals und Aufnahmeteil realisierbar ist und daß andererseits die Fixiereinrichtung durch die elastischen Zugstangen mit einer in Einsteckrichtung wirkenden Kraftkomponente auf die Formschlußelemente einwirkt und somit diese in Einsteckrichtung in Anlage hält.

Damit wird im Gegensatz zu dem eingangs beschriebenen Stand der Technik eine spielfreie Verbindung mittels der Formschlußelemente in einfacher Weise realisierbar und einfach fertigbar, während die Fixiereinrichtung lediglich noch die Aufgabe hat, die Formschlußelemente in Anlage zu halten und keinerlei Teile mehr aufweist, die in der Lage sein müssen, die von der Anhängelast wirkende Kraft zwischen Kugelhals und Aufnahmeteil aufzunehmen.

Damit sind hinsichtlich Festigkeit und Präzision geringere Anforderungen an die Teile der Fixiereinrichtung zu stellen, als dies beim Stand der Technik der Fall ist.

Die spielfreie Fixierung des Kugelhalses in der Aufnahmehülse läßt sich jedoch noch dadurch verbessern, daß die Fixiereinrichtung nicht nur mit einer in Einsteckrichtung gerichteten Kraftkomponente auf die Formschlußelemente wirkt, sondern auch mit einer quer zur Einsteckrichtung gerichteten Kraftkomponente. Diese Lösung hat den Vorteil, daß somit zusätzlich noch mit dieser quer zur Einsteckrichtung gerichteten Kraftkomponente eine Verbesserung der Spielfreiheit zwischen den Formschlußelementen erreichbar ist.

Die Spielfreiheit läßt sich besonders gut dann erreichen, wenn die in Einsteckrichtung gerichtete Kraftkomponente und die quer zur Einsteckrichtung gerichtete Kraftkomponente in der gleichen Größenordnung liegen.

Besonders günstig ist es hinsichtlich der Spielfreiheit, wenn die von der Fixiereinrichtung auf die Formschlußelemente ausgehende Kraft eine Kraftkomponente aufweist, welche in Einsteckrichtung größer ist als quer zu dieser. Damit ist auf alle Fälle eine sichere und spielfreie Fixierbarkeit der Formschlußelemente relativ zueinander gewährleistet.

Die Formschlußelemente können prinzipiell in beliebiger Art und Weise ausgebildet sein.

Besonders vorteilhaft ist es dabei, wenn die am Kugelhals angeordneten Formschlußelemente zwei auf gegenüberliegenden Seiten des Kugelhalses angeordnete Vorsprünge aufweisen.

Diese Vorsprünge können beispielsweise auf den Kugelhals aufgesetzte Körper sein. Eine hinsichtlich der Herstellbarkeit besonders günstige Lösung sieht vor, daß die am Kugelhals angeordneten Formschlußelemente durch seitlich über den Kugelhals überstehende Endbereiche eines den Kugelhals durchsetzenden Querbolzens gebildet sind. In diesem Fall sind die am Kugelhals angeordneten Formschlußelemente durch Montage des den Kugelhals durchsetzenden Querbolzens in besonders einfacher Weise fixierbar.

Hinsichtlich der Anordnung der an dem Aufnahmeteil oder der von diesem umfaßten Aufnahmehülse angeordneten Formschlußelemente wurden im Zusammenhang mit den bisherigen Ausführungsbeispielen ebenfalls keine näheren Angaben gemacht. So sieht ein vorteilhaftes Ausführungsbeispiel vor, daß die an der Aufnahmehülse angeordneten Formschlußelemente nahe einer Einstecköffnung für den Kugelhals angeordnet sind. In diesem Fall lassen sich die am Kugelhals angeordneten Formschlußelemente und die am Aufnahmeteil angeordneten Formschlußelemente in besonders einfacher Weise miteinander in Eingriff bringen.

Die Formschlußelemente könnten beispielsweise als Vorsprünge an der Aufnahmehülse angeordnet sein. Besonders einfach herstellbar ist jedoch eine Lösung, bei welcher die an der Aufnahmehülse angeordneten Formschlußelemente als Ausnehmungen ausgebildet sind.

Um die gewünschte Spielfreiheit zwischen dem Kugelhals und dem Aufnahmeteil herzustellen, ist es besonders günstig, wenn die Formschlußelemente im wesentlichen spielfrei in Eingriff bringbar sind, das heißt, bei einer Bewegung in Einsteckrichtung so ineinander eingreifen, daß ein spielfreier Eingriff entsteht.

Dies läßt sich beispielsweise dadurch realisieren, daß die Formschlußelemente mit in Einsteckrichtung zunehmend geringerem Abstand voneinander verlaufende Formschlußflächen aufweisen.

Grundsätzlich wäre es möglich, die von der Anhängelast auf die Verbindung zwischen Aufnahmeteil und Kugelhals ausgeübte Kraft lediglich durch die Formschlußelemente aufzunehmen, wenn diese mit ausreichender Stabilität ausgebildet sind. Eine besonders günstige Lösung sieht jedoch vor, daß das in die Aufnahmehülse eingreifende Endstück mit der Aufnahmehülse eine im Abstand von den Formschlußelementen angeordnete erste Querführung bildet und daß die Formschlußelemente eine zweite Querführung bilden. Somit ist eine Führung des Kugelhalses in dem Aufnahmeteil quer zur Einsteckrichtung nicht nur durch die Formschlußelemente gewährleistet, sondern zusätzlich noch durch eine zusätzliche erste Querführung, welche zwischen dem Endstück und der Aufnahmehülse gebildet ist. Damit ist die erfindungsgemäße Verbindung zwischen Aufnahmeteil und Kugelhals gegenüber quer zur Einsteckrichtung wirkenden Kräften sehr stabil.

Diese Stabilität läßt sich besonders zweckmäßig dann ausnutzen, wenn die Einsteckrichtung quer zur Zugrichtung, das heißt zur Richtung der von der Anhängelast wirkenden Kräfte verläuft, so daß die von der Anhängelast ausgeübten Kräfte im wesentlichen Querkräfte der Verbindung zwischen Aufnahmeteil und Kugelhals darstellen und somit bei der erfindungsgemäßen Lösung besonders zweckmäßig aufgefangen werden können und insbesondere eine Konstruktion erlauben, bei welcher die Fixiereinrichtung keinerlei derartige Kräfte aufnehmen oder Toleranzen gewährleisten muß und somit besonders einfach dimensioniert und aufgebaut sein kann.

Hinsichtlich der Ausbildung des Kniehebelmechanismus der Fixiereinrichtung wurden im Zusammenhang mit der bisherigen Erläuterung der einzelnen Ausführungsbeispiele ebenfalls keine detaillierten Angaben gemacht.

Der Kniehebelmechanismus kann grundsätzlich beliebig ausgebildet sein. Ein vorteilhaftes Ausführungsbeispiel sieht dabei vor, daß der Kniehebelmechanismus am Kugelhals gelagert ist.

Besonders günstig ist es hierbei, wenn der Kniehebelmechanismus am Kugelhals um eine Achse schwenkbar gelagert ist, welche quer zur Fahrtrichtung und ungefähr parallel zu einer Fahrzeugunterseite ausgerichtet ist.

Hinsichtlich der Anordnung der Schwenkachse für den Kniehebelmechanismus am Kugelhals sind die unterschiedlichsten Möglichkeiten denkbar. Beispielsweise ist es denkbar, die Schwenkachse auf einer Seite des Kugelhalses anzuordnen.

Eine besonders günstige Lösung sieht vor, daß der Kniehebelmechanismus um eine Achse schwenkbar am Kugelhals gelagert ist, welche einen mittigen Bereich desselben durchsetzt. Eine derartige Lösung hat den Vorteil, daß damit einerseits das die Schwenkachse tragende Element einfach am Kugelhals befestigbar ist und andererseits die Möglichkeit gegeben ist, günstige Hebelverhältnisse des Kniehebelmechanismus zu wählen.

Eine besonders günstige Ausführungsform sieht vor, daß der Kniehebelmechanismus an den Formschlußelementen des Kugelhalses drehbar gelagert ist, so daß insbesondere die Möglichkeit besteht, die Formschlußelemente gleichzeitig als Lagerelemente für den Kniehebelmechanismus vorzusehen.

Dabei ist es besonders zweckmäßig, wenn der Kniehebelmechanismus an einem Querbolzen gelenkig gehalten ist, welcher zur Verdrehsicherung an entsprechenden Ausnehmungen in der Aufnahmehülse eingreift.

Um gleichzeitig den Kniehebelmechanismus der Fixiereinrichtung so auszubilden, daß dieser in seiner verriegelten Stellung bleibt, ist vorzugsweise vorgesehen, daß der Kniehebelmechanismus in der verriegelten Stellung in einer Übertotpunktstellung steht, so daß durch die Übertotpunktstellung, in welcher der Kniehebelmechanismus vorzugsweise an einer Anlage anliegt, die den Kugelhals fixierende Stellung der Fixiereinrichtung aufrecht erhalten wird.

Eine hinsichtlich Stabilität und Einfachheit des Aufbaus besonders zweckmäßige Lösung sieht vor, daß der Kniehebelmechanismus ein den Kugelhals U-förmig umgreifendes und an diesem gelagertes Halteteil aufweist, welches erste Hebel des Kniehebelmechanismus bildet.

Als zweite Hebel des Kniehebelmechanismus ist vorgesehen, daß dieser mit dem Fixierelement verbundene Zughebel (Zugstangen) aufweist, wobei die Zughebel vorzugsweise mit dem Fixierelement starr verbunden sind und ebenfalls eine ungefähr U-förmige Einheit bilden.

Eine besonders günstige Lösung sieht vor, daß in der den Kugelhals fixierenden Stellung der Fixiereinrichtung diesen mit einer Zugkraft auf die Formschlußelemente wirkt, welche mit der Einsteckrichtung einen Winkel von weniger als 60°, vorzugsweise weniger als 45° einschließt.

Hinsichtlich des Angriffspunktes an dem Fixierelement wurden im Zusammenhang mit der bisherigen Beschreibung der erfindungsgemäßen Lösungen ebenfalls keine näheren Angaben gemacht. So sieht ein besonders vorteilhaftes Ausführungsbeispiel vor, daß das Fixierelement ausschließlich auf die Aufnahmehülse wirkt, das heißt, daß das Fixierelement insbesondere keinerlei sperriegelähnliche Verbindung zwischen der Aufnahmehülse und dem Endstück herstellt, wie dies beispielsweise bei dem eingangs genannten Stand der Technik der Fall ist.

Dies läßt sich konstruktiv besonders einfach dadurch realisieren, daß das Fixierelement in einem mantelseitig der Aufnahmehülse angeordnetes Widerlager eingreift.

Dieses Widerlager kann beispielsweise ein Vorsprung am Aufnahmeteil oder der Aufnahmehülse sein. Eine besonders günstige Lösung sieht jedoch vor, daß das Widerlager eine in einer Wand der Aufnahmehülse vorgesehene Nut darstellt.

Besonders günstig ist es hierbei, wenn das Widerlager radial außerhalb einer Innenwandfläche der Aufnahmehülse liegt und somit lediglich in einer Wand der Aufnahmehülse sehr einfach eingearbeitet werden kann.

Um die Fixiereinrichtung günstig betätigen zu können, ist vorzugsweise vorgesehen, daß die Fixiereinrichtung einen Handhebel aufweist, welcher in einer Ebene bewegbar ist, die ungefähr parallel zu einer Krümmungsebene des Kugelhalses verläuft. Eine derartige Anordnung des Handhebels ist insbesondere ergonomisch günstig, um den zum Betätigen der Fixiereinrichtung erforderlichen Kraftaufwand zweckmäßig aufbringen zu können.

Zur weiteren Sicherung der Fixiereinrichtung ist - obwohl diese in ihrer den Kugelhals fixierenden Stellung verbleibend ausgebildet ist - vorzugsweise eine zusätzliche Sperreinrichtung vorgesehen, mit welcher ein Übergang von der den Kugelhals fixierenden Stellung in die den Kugelhals freigebende Stellung lösbar blockierbar ist.

Vorzugsweise umfaßt eine derartige Sperreinrichtung einen an dem Halteteil schwenkbar gelagerten Sperrhebel, welcher federbeaufschlagt in einer Stellung steht, in welcher er zusammen mit einem am Aufnahmeteil vorgesehenen Widerlager ein Verschwenken des Halteteils von der den Kugelhals fixierenden Stellung in die den Kugelhals freigebende Stellung lösbar blockiert. Zum Lösen der Sperreinrichtung ist der Sperrhebel entgegen der Federkraft zu verschwenken, so daß dieser beim Verschwenken des Halteteils an dem Widerlager vorbeibewegbar ist.

Mit dieser erfindungsgemäßen Sperreinrichtung ist eine besonders sichere Blockierung des Kniehebelmechanismus möglich, da diese unmittelbar auf den Kniehebelmechanismus wirkt und somit selbst eine Beschädigung des Handhebels die Sperrwirkung der Sperreinrichtung auf den Kniehebelmechanismus nicht beeinträchtigt.

Bei einer vorteilhaften Weiterbildung ist am Kugelhals der Kniehebelmechanismus mit Übertotpunktstellung vorgesehen, der einen in eine Nut am Aufnahmeteil eingreifenden Verriegelungsbolzen aufweist.

Eine zweckmäßige Weiterbildung dieser Lösung sieht vor, daß der Kugelhals mit einem Querbolzen ausgerüstet ist, der zur Verdrehsicherung in entsprechende Ausnehmungen am Aufnahmeteil eingreift, daß an dem Querbolzen ein den Kugelhals umfassendes, mit einem Handhebel verschwenkbares Halteteil angeordnet ist, an dem die mit dem Verriegelungsbolzen verbundenen Zugstangen gelagert sind.

Ferner ist es günstig, wenn ein verschwenkbarer Sperrhebel vorgesehen ist, der durch eine Feder, zum Beispiel eine Schenkelfeder, in eine Stellung gedrückt wird, in der ein Verschwenken des Halteteils verhindert wird.

Eine weitere vorteilhafte Lösung sieht vor, daß eine Feder, zum Beispiel eine Schenkelfeder, vorgesehen ist, welche die Zugstangen in die Verriegelungsstellung drückt.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine Seitenansicht einer erfindungsgemäßen Anhängevorrichtung;
- Fig. 2: eine Schnittansicht einer erfindungsgemäßen Anhängevorrichtung längs Linie 2-2 in Fig. 1;
- Fig. 3: eine Seitenansicht in Richtung eines Pfeils 3 in Fig. 2 mit teilweise geschnittenem Aufnahmeteil und einer in einer den Kugelhals fixierenden Stellung stehenden Fixiereinrichtung und
- Fig. 4: eine Darstellung ähnlich Fig. 3 mit in einer den Kugelhals freigebenden Stellung der Fixiereinrichtung.

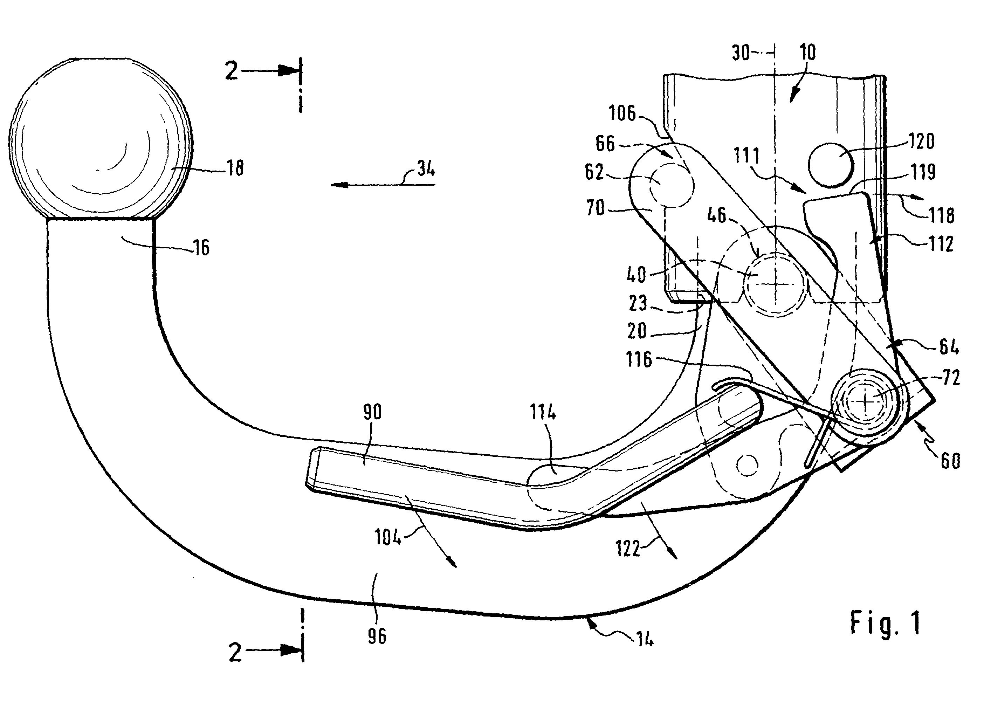

Ein Ausführungsbeispiel einer erfindungsgemäßen Anhängevorrichtung, dargestellt in den Fig. 1 bis 4, umfaßt ein Aufnahmeteil 10, welches über einen Querträger 12 am Heck eines Kraftfahrzeugs befestigbar ist.

An dem Aufnahmeteil 10 ist ein als Ganzes mit 14 bezeichneter Kugelhals lösbar befestigbar. Der Kugelhals 14 ist dabei ungefähr U-förmig gebogen und weist an einem ersten Ende 16 eine Kupplungskugel 18 auf und an einem zweiten Ende 20 ein zapfenähnlich geformtes Endstück 22, welches durch eine Einstecköffnung 23 in eine vom Aufnahmeteil 10 umfaßte Aufnahmehülse 24 einsetzbar ist.

Das Endstück 22 ist dabei endseitig mit einem Bund 26 versehen, welcher an einer zylindrischen Innenfläche 28 der Aufnahmehülse bei in das Aufnahmeteil 10 eingesetztem Kugelhals mit geringem Spiel oder im wesentlichen spielfrei geführt ist, wobei der Bund 26 und die Innenfläche 28 der Aufnahmehülse 24 insgesamt eine erste Querführung für den Kugelhals 14 bilden, welche es verhindert, daß sich das Endstück 22 quer zu einer Mittelachse 30 der Führungshülse 24 bewegt.

Die Mittelachse 30 der Führungshülse verläuft dabei einerseits quer zu einer Fahrtrichtung 32 des Kraftfahrzeugs und ebenfalls quer zu einer Zugrichtung 34 in welcher eine an der Kupplungskugel 18 angreifende Anhängelast wirksam ist.

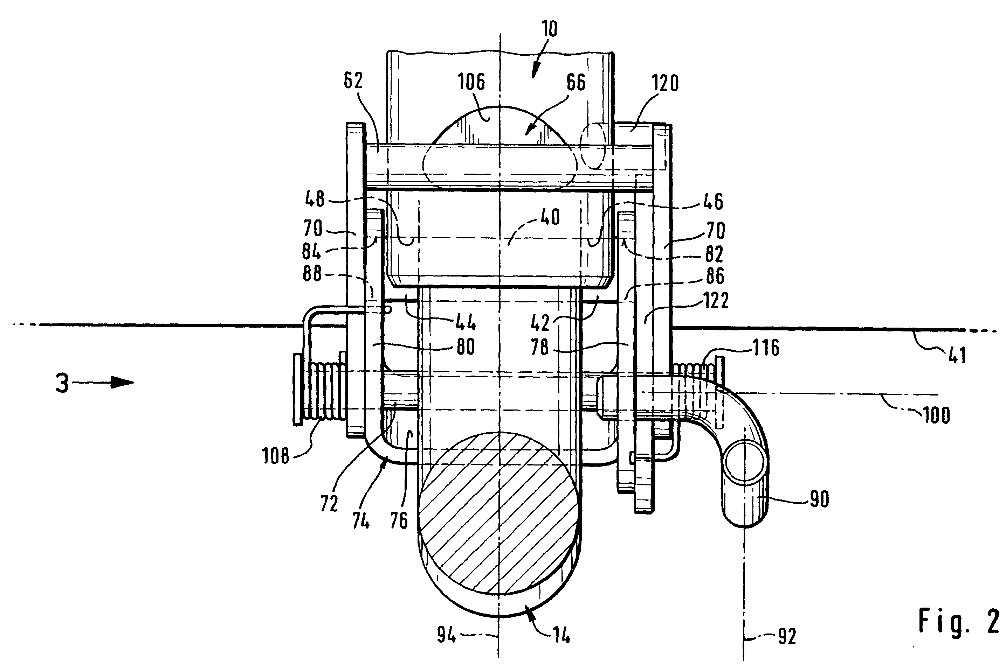

Das zweite Ende 20 des Kugelhalses 14 ist ferner durch einen das Ende 20 in einem mittigen Bereich 36 durchsetzenden Querbolzen 40 fixierbar, welcher, wie in Figur 2 dargestellt, sich ungefähr parallel zu einer Fahrzeugunterseite 41 und parallel zum Querträger 12 und quer zur Fahrtrichtung 32 erstreckt und beiderseits über den Kugelhals 14 übersteht und mit seinen auf einander gegenüberliegenden Seiten überstehenden Bereichen 42 und 44 einen ersten Satz von Formschlußelementen bildet, welche eine zylindrische Mantelfläche aufweisen und in Ausnehmungen 46 und 48 im Aufnahmeteil 10 eingreifen, welche sich von der Einstecköffnung 23 an einem dem Querträger 12 abgewandten Ende der Aufnahmehülse 24 ausgehend bogenförmig in diese hineinerstrecken und einen zweiten Satz von Formschlußelementen 46, 48 bilden, deren halbzylinderähnliche Innenflächen die zylindrischen Mantelflächen der Formschlußelemente 42, 44 im wesentlichen spielfrei aufnehmen.

Der erste Satz von Formschlußelementen 42, 44 und der zweite Satz von Formschlußelementen 46, 48 dienen somit dazu, das Ende 20 des Kugelhalses 14 sowohl in Form einer zweiten Querführung gegen jegliche Bewegungen quer zur Mittelachse 30 der Aufnahmehülse 24 zu sichern, andererseits aber auch dazu, eine Endlage für das Einsetzen des Endstücks 22 in die Aufnahmehülse 24 in Einsteckrichtung 52 zu definieren.

Somit ist das Ende 20 des Kugelhalses 14 in dem Aufnahmeteil 10 einerseits durch die erste Querführung, gebildet durch den Bund 26 und die Innenfläche 28 der Aufnahmehülse 24, und andererseits durch die zwei Sätze von Formschlußelementen 42, 44 und 46, 48 relativ zum Aufnahmeteil 10 im wesentlichen spielfrei fixierbar, wobei in Zugrichtung 34 wirkende Kräfte im wesentlichen durch die erste Querführung 26, 28 und die zweite Querführung 42, 44 und 46, 48 aufgenommen werden.

Ferner bilden die beiden Sätze von Formschlußelementen 42, 44 und 46, 48 noch zusätzlich eine Verdrehsicherung des Kugelhalses 14 relativ zum Aufnahmeteil 10.

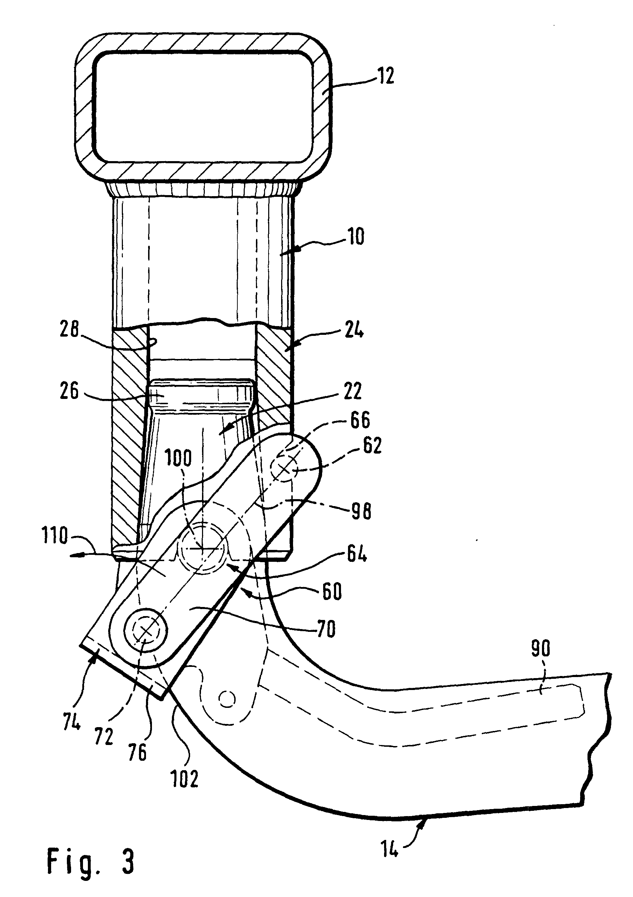

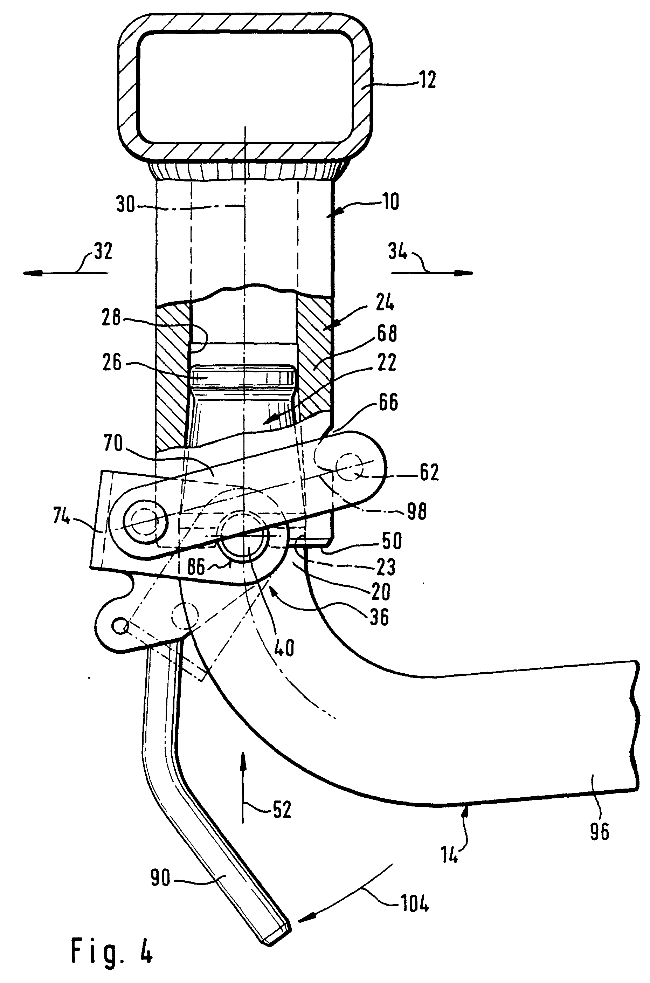

Zur Fixierung des Kugelhalses 14 in dem Aufnahmeteil 10 ist eine als Ganzes mit 60 bezeichnete Fixiereinrichtung vorgesehen, welche ein als Verriegelungsbolzen ausgebildetes Fixierelement 62 aufweist, das über einen Kniehebelmechanismus 64 zwischen einer den Kugelhals 14 am Aufnahmeteil 10 fixierenden Stellung, dargestellt in Fig. 3, und einer den Kugelhals 14 relativ zum Aufnahmeteil 10 freigebenden Stellung, dargestellt in Fig. 4, bewegbar ist. Hierzu ist der Verriegelungsbolzen 62 in eine als Nut ausgebildetes Widerlager 66 in dem Aufnahmeteil 10 einsetzbar. Die Nut 66 erstreckt sich dabei in eine Wand 68 der Aufnahmehülse 24 hinein, durchsetzt jedoch diese nicht, so daß der Verriegelungsbolzen 62 in seiner in die Nut 66 eingreifenden Lage berührungsfrei gegenüber dem in die Aufnahmehülse 24 eingesetzten Endstück 22 verläuft.

Der Kniehebelmechanismus 64 umfaßt seinerseits zwei starr mit dem Verriegelungsbolzen 62 verbundene, als erste Hebel wirksame Zughebel oder Zugstangen 70, welche drehbar an einem Bolzen 72 gelagert sind, der seinerseits an einem Halteteil 74 angeordnet ist. Das Halteteil 74 ist U-förmig gebogen und weist einen Mittelschenkel 76 auf, von welchem zwei Seitenschenkel 78 und 80 abstehen, die ihrerseits zweite Hebel des Kniehebelmechanismus 64 bilden, wobei diese zweiten Hebel 78 und 80 drehbar an dem Querbolzen 40 und somit an den Formschlußelementen 42 und 44 gelagert sind. Dabei erstreckt sich vorzugsweise der Querbolzen 40 über die Formschlußelemente 42 und 44 noch hinaus und bildet somit Drehlagerflächen 82 und 84, welche in einer diesen entsprechenden Ausnehmung 86, 88 in den jeweiligen Seitenschenkel 78, 80 liegen, so daß das Halteteil 74 drehbar an dem Querbolzen 40 gelagert ist, welcher gleichzeitig die Formschlußelement 42, 44 bildet.

Zum Überführen des Kniehebelmechanismus 64 von seiner den Kugelhals freigebenden in seine den Kugelhals fixierende Stellung ist das Halteteil 74 mit einem Handhebel 90 versehen, welcher in einer Ebene 92 verschwenkbar ist, die ungefähr parallel zu einer Längsmittelebene 94 des gebogenen Kugelhalses 14 verläuft.

Der Handhebel 90 ist dabei so an das Halteteil 74 angeformt, daß dieser in der den Kugelhals 14 freigebenden Stellung der Fixiereinrichtung 60 in einer ungefähr in Richtung der Mittelachse 30 von dem Aufnahmeteil 10 weg nach unten weisenden Stellung steht, während der Handhebel 90 in der den Kugelhals 14 fixierenden Stellung der Fixiereinrichtung 60 neben dem Kugelhals 14 liegt und über seine Längserstreckung ungefähr einem gekrümmten Verlauf eines sich zwischen dem Ende 16 und dem Ende 20 erstreckenden Körpers 96 des Kugelhalses 14 angepaßt ist.

Ferner ist der Kniehebelmechanismus 64 so ausgebildet, daß er in seiner den Kugelhals 14 fixierenden Stellung, dargestellt in Fig. 1 und 3, in einer Übertotpunktstellung steht, in welcher eine Verbindungslinie 98 zwischen dem Verriegelungsbolzen 62 und dem Bolzen 72 auf einer dem Aufnahmeteil 10 abgewandten Seite einer Drehachse 100 liegt, um welche das Halteteil 74 mit den Drehlagerflächen 86 und 88 am Querbolzen 40 drehbar gelagert ist. Diese Übertotpunktstellung wird begrenzt durch den Mittelschenkel 76 des U-förmigen Halteteils 74, welcher in der fixierenden Stellung an einer Außenseite 102 des Körpers 96 des Kugelhalses 14 anliegt.

Zum Überführen des Kniehebelmechanismus 64 in diese den Kugelhals 14 freigebende Stellung wird der Handhebel 90 in Richtung eines Pfeils 104 von dem Aufnahmeteil 10 weg nach unten geschwenkt, in die in Fig. 4 dargestellte Stellung. Hierbei wird das Halteteil 74 in Richtung des Aufnahmeteils 10 verschwenkt und gleichzeitig verschwenkt die Verbindungslinie 98 bei noch in der Nut 66 liegendem Verriegelungsbolzen 62 um den Verriegelungsbolzen dergestalt, daß die Verbindungslinie 98 über die Drehachse 100 weg in Richtung des Halteteils 10 wandert, wobei gleichzeitig der Verriegelungsbolzen 62 längs einer Einlaufschräge 106 der Nut 66 in Richtung des Querträgers 12 wandert und bei zunehmender weiterer Verschwenkung die Nut 66 verläßt.

Hierzu ist eine zwischen dem Halteteil 74 und einer der Zugstangen 70 wirksame Feder 108, beispielsweise eine Schenkelfeder, vorgesehen, welche winkelbegrenzt die Einheit aus den Zugstangen 70 und dem Verriegelungsbolzen 62 in einer Richtung 110 verschwenkt, so daß der Verriegelungsbolzen 62 an der Einlaufschräge 106 entlang gleitet, wobei die Winkelbegrenzung vor Erreichen der den Kugelhals 14 freigebenden Stellung des Handhebels 90 einsetzt, um den Verriegelungsbolzen 62 vollständig aus der Nut 66 herauszuschwenken.

Umgekehrt wird beim Überführen der Fixiereinrichtung von der den Kugelhals 12 freigebenden Stellung in die den Kugelhals 12 fixierende Stellung der Verriegelungsbolzen 62 zunächst in Anlage an die Einlaufschräge 106 geschwenkt und dann von der Feder 108 in Anlage an der Einlaufschräge 106 gehalten, so daß ohne weitere Manipulation der Verriegelungsbolzen 62 durch Entlanggleiten auf der Einlaufschräge 106 in die Nut 66 hineinläuft.

Um ferner in der verriegelnden Stellung der Fixiereinrichtung 60 den ersten Satz von Formschlußelementen 42, 44 und den zweiten Satz von Formschlußelementen 46, 48 gegeneinander mit einer elastischen Kraft beaufschlagt in Anlage zu halten, sind die Zugstangen 70 in ihrer Längsrichtung federelastisch ausgebildet, so daß ein Abstand zwischen dem Bolzen 72 und dem Verriegelungsbolzen 62 federelastisch variabel ist. Dies ist entweder durch eine gebogene oder gekröpfte Form der Zugstangen realisierbar oder durch eine entsprechende Materialwahl. Somit halten die Zugstangen 70 aufgrund ihrer Längselastizität auch in der Übertotpunktstellung den Kugelhals 14 im wesentlichen spielfrei im Aufnahmeteil 10 fixiert, wobei die in der Zugrichtung 34 wirkende Anhängelast nicht auf die Elemente der Fixiereinrichtung 60 wirkt, sondern auf die Formschlußelemente 42, 44 und 46, 48 sowie die Querführung durch den Bund 26 und die Innenfläche 28 des Endstücks 22 in der Aufnahmehülse 24.

Die Fixiereinrichtung 60 wird - wie bereits vorstehend dargelegt - einerseits dadurch gesichert, daß der Kniehebelmechanismus 64 die Übertotpunktstellung einnimmt und außerdem zusätzlich durch eine als Ganzes mit 111 bezeichnete Sperreinrichtung, welche einen am Bolzen 72 des Halteteils 74 gelagerten Sperrhebel 112 aufweist, der einen mit diesem verbundenen Betätigungshebel 114 aufweist, welcher sich ungefähr parallel zum Handhebel 90 und auch parallel zur Ebene 92 erstreckt. Der Sperrhebel 112 ist dabei durch eine Feder 116, vorzugsweise eine Schenkelfeder, in einer Richtung 118 vom Querbolzen 40 weg beaufschlagt und in dieser Sperrstellung durch einen Anschlag relativ zum Halteteil 74 festgelegt.

Bei der den Kugelhals 14 fixierenden Stellung der Fixiereinrichtung 60 ist ein Verschwenken des Handhebels 90 in Richtung 104 und somit ein entsprechendes Verschwenken des Halteteils 74 dadurch nicht möglich, weil der Sperrhebel 112 mit einer Endfläche 119 gegen ein am Aufnahmeteil 10 angeordnetes Gegenlager 120 anschlägt.

Erst ein Verschwenken des Sperrhebels 112 entgegengesetzt zur Richtung 118 und gegen die Kraftwirkung der Feder 116 ermöglicht es, das Halteteil 74 zu verschwenken, da damit die Endfläche 119 seitlich am Gegenlager 120 vorbeibewegbar ist.

Vorzugsweise ist hierzu der Betätigungshebel 114 ebenfalls in einer Richtung 122 zu bewegen, die ungefähr gleichgerichtet zur Richtung 104 ist, in welcher der Handhebel 90 zum Bewegen der Fixiereinrichtung 60 in die den Kugelhals 14 freigebende Stellung bewegbar ist.

Die Anhängevorrichtung umfaßt insbesondere ein Aufnahmeteil 10, das am Heck eines Kraftwagens befestigbar ist, und einen Kugelhals 14 mit Kupplungskugel, der in das Aufnahmeteil 10 eingesetzt ist. Ein Querbolzen 40 durch den Kugelhals 14 bildet eine Verdrehsicherung dadurch, daß er in entsprechende Ausnehmungen 46, 48 am Aufnahmeteil 10 eingreift.

An dem Querbolzen 40, der beiderseits des Aufnahmeteiles 10 übersteht, ist ein den Kugelhals 14 umgreifendes Halteteil 74 schwenkbar gelagert, das mit dem Handhebel 90 verbunden ist und an dem in sich federnd ausgebildete Zugstangen 70 mit Bolzen 72 gelagert sind, die durch den Verriegelungsbolzen 62 verbunden sind. Der Verriegelungsbolzen 62 liegt in einer Nut 66 im Aufnahmeteil 10. Die aus Fig. 1 ersichtliche Eingriffsstellung des Verriegelungsbolzens 62 wird einmal dadurch gesichert, daß der Kniehebelmechanismus eine Übertotpunktstellung einnimmt, indem eine Verbindungslinie zwischen den Bolzen 72 und dem Verriegelungsbolzen 62 außerhalb des Mittelpunktes 110 vom Querbolzen 40 liegt. Eine zusätzliche Sicherung ist durch eine Feder, zum Beispiel Schenkelfeder erzielbar.

Um ein unbeabsichtigtes Lösen der Verriegelung zu verhindern, ist an dem Bolzen 72 ein verschwenkbarer Sperrhebel 112 gelagert, der in der gezeichneten Sperrstellung nach Fig. 1 ein Verschwenken des Halteteils 74 dadurch verhindert, daß er mittels einer Feder, zum Beispiel Schenkelfeder an einem Gegenlager 120 des Aufnahmeteils 10 anschlägt und ein Entriegeln des Kniehebelmechanismus nicht zuläßt, weil er zum Beispiel wie dargestellt an einem am Aufnahmeteil 10 angeordneten Bolzen 120 anschlägt.

Bei verriegeltem Kugelhals 14 im Aufnahmeteil 10 nehmen alle Teile die aus Fig. 1 ersichtliche Stellung ein. Zum Lösen der Verriegelung wird der Sperrhebel 112 so geschwenkt, daß dieser sich entgegengesetzt zur Pfeilrichtung 118 bewegt, dann wird mittels des Handhebels 90 der Halteteil 74 in Pfeilrichtung 104 geschwenkt, so daß über die Zugstangen 70 der Verriegelungsbolzen 62 aus der Nut 66 austritt. Daraufhin kann der Kugelhals 14 aus seinem Aufnahmeteil 10 herausgezogen werden.

## Patentansprüche

1. Anhängevorrichtung für Kraftfahrzeuge, insbesondere für Personenkraftfahrzeuge, umfassend ein am Heck des Kraftfahrzeugs befestigbares Aufnahmeteil (10), welches als Aufnahmehülse (24) ausgebildet ist, einen eine Kupplungskugel tragenden Kugelhals (14) welcher mit einem in der quer zur Zugrichtung (34) verlaufenden Einsteckrichtung (52) in die Aufnahmehülse (24) einsetzbaren Endstück (22) versehen ist, wobei die Aufnahmehülse (24) und der Kugelhals (14) mit zusammenwirkenden Formschlußelementen (42, 44, 46, 48) versehen sind, die durch die Bewegung in Einsteckrichtung (52) in Eingriff bringbar sind und in dieser Stellung für den Kugelhals (14) in Einsteckrichtung (52) einen Anschlag und eine zweite Querführung bilden, und eine Fixiereinrichtung (60), mit welcher der Kugelhals (14) an dem Aufnahmeteil (10) lösbar fixierbar ist, und welche ein zwischen einer den Kugelhals (14) freigebenden Stellung und einer den Kugelhals (14) an dem Aufnahmeteil (10) fixierenden Stellung bewegbares Fixierelement (62) aufweist, wobei
das Fixierelement (62) durch einen Hebelmechanismus (60) bewegbar ist, welcher ein in Längsrichtung federnd abgestütztes Zugelement (70) umfaßt und wobei mittels dieses federnd abgestützten Zugelementes (70) mit dem Fixierelement (62) und dem Hebelmechnismus (60) in der verriegelten Stellung eine parallel zur Einsteckrichtung (52) gerichtete elastische Kraftkomponente erzeugbar ist, welche die Formschlußelemente (42, 44, 46, 48) in Anlage hält, **dadurch gekennzeichnet**, daß der Hebelmechanismus ein Kniehebelmechanismus (60) ist und daß das federnd abgestützte Zugelement aus in Längsrichtung in sich Federelastisch ausgebildeten Zügstangen (70) besteht.

2. Anhängevorrichtung nach Anspruch 1, dadurch gekennzeichnet, daß die Fixiereinrichtung (60) mit einer quer zur Einsteckrichtung (52) gerichteten Kraftkomponente auf die Formschlußelemente (42, 44, 46, 48) wirkt.

3. Anhängevorrichtung nach einem der voranstehenden Ansprüche, dadurch gekennzeichnet, daß die am Kugelhals (14) angeordneten Formschlußelemente zwei auf gegenüberliegenden Seiten des Kugelhalses (14) angeordnete Vorsprünge (42, 44) umfassen.

4. Anhängevorrichtung nach Anspruch 3, dadurch gekennzeichnet, daß die am Kugelhals (14) angeordneten Formschlußelemente (42, 44) durch seitliche über den Kugelhals überstehende Endbereiche eines den Kugelhals (14) durchsetzenden Querbolzens (40) gebildet sind.

5. Anhängevorrichtung nach einem der voranstehenden Ansprüche, dadurch gekennzeichnet, daß die an der Aufnahmehülse (24) angeordneten Formschlußelemente (46, 48) nahe einer Einstecköffnung (23) für den Kugelhals (14) angeordnet sind.

6. Anhängevorrichtung nach einem der voranstehenden Ansprüche, dadurch gekennzeichnet, daß die an der Aufnahmehülse (24) angeordneten Formschlußelemente als Ausnehmungen (46, 48) ausgebildet sind.

7. Anhängevorrichtung nach einem der voranstehenden Ansprüche, dadurch gekennzeichnet, daß die Formschlußelemente (42, 44, 46, 48) im wesentlichen spielfrei in Eingriff bringbar sind.

8. Anhängevorrichtung nach einem der voranstehenden Ansprüche, dadurch gekennzeichnet, daß die Formschlußelemente (42, 44, 46, 48) mit in Einsteckrichtung (52) zunehmend geringerem Abstand voneinander verlaufenden Formschlußflächen versehen sind.

9. Anhängevorrichtung nach einem der voranstehenden Ansprüche, dadurch gekennzeichnet, daß das in die Aufnahmehülse (24) eingreifende Endstück (22) mit der Aufnahmehülse (24) eine im Abstand von den Formschlußelementen (42, 44, 46, 48) angeordnete erste Querführung (26, 28) bildet und daß die Formschlußelemente (42, 44, 46, 48) die zweite Querführung bilden.

10. Anhängevorrichtung nach einem der voranstehenden Ansprüche, dadurch gekennzeichnet, daß der Kniehebelmechanismus (64) am Kugelhals (14) gelagert ist.

11. Anhängevorrichtung nach Anspruch 10, dadurch gekennzeichnet, daß der Kniehebelmechanismus (64) an dem Kugelhals (14) um eine Achse (100) schwenkbar gelagert ist, welche quer zur Fahrtrichtung (34) und ungefähr parallel zu einer Fahrzeugunterseite (41) verläuft.

12. Anhängevorrichtung nach einem der voranstehenden Ansprüche, dadurch gekennzeichnet, daß der Kniehebelmechanismus (64) um eine Achse (100) schwenkbar am Kugelhals (14) gehalten ist, welche einen mittigen Bereich desselben durchsetzt.

13. Anhängevorrichtung nach einem der voranstehenden Ansprüche, dadurch gekennzeichnet, daß der Kniehebelmechanismus (64) an den Formschlußelementen (42, 44) des Kugelhalses (14) drehbar gelagert ist.

14. Anhängevorrichtung nach einem der voranstehenden Ansprüche, dadurch gekennzeichnet, daß der Kniehebelmechanismus (64) an einem Querbolzen (40) gelenkig gehalten ist, welcher zur Verdrehsicherung in entsprechende Ausnehmungen (46, 48) in der Aufnahmehülse (24) eingreift.

15. Anhängevorrichtung nach einem der voranstehenden Ansprüche, dadurch gekennzeichnet, daß der Kniehebelmechanismus (64) in der verriegelten Stellung in einer Übertotpunktstellung steht.

16. Anhängevorrichtung nach einem der voranstehenden Ansprüche, dadurch gekennzeichnet, daß der Kniehebelmechanismus (64) ein den Kugelhals (14) U-förmig umgreifendes und an diesem gelagertes Halteteil (74) aufweist.

17. Anhängevorrichtung nach einem der voranstehenden Ansprüche, dadurch gekennzeichnet, daß das Fixierelement (62) ausschließlich auf die Aufnahmehülse (24) wirkt.

18. Anhängevorrichtung nach Anspruch 17, dadurch gekennzeichnet, daß das Fixierelement (62) in ein mantelseitig der Aufnahmehülse (24) angeordnetes Widerlager (66) eingreift.

19. Anhängevorrichtung nach Anspruch 18, dadurch gekennzeichnet, daß das Widerlager (66) radial außerhalb einer Innenwandfläche (28) der Aufnahmehülse (24) liegt.

20. Anhängevorrichtung nach einem der voranstehenden Ansprüche, dadurch gekennzeichnet, daß die Fixiereinrichtung (60) einen Handhebel (90) aufweist, welcher in einer Ebene (92) bewegbar ist, die ungefähr parallel zu einer Krümmungsebene (94) des Kugelhalses (14) verläuft.

21. Anhängevorrichtung nach einem der voranstehenden Ansprüche, dadurch gekennzeichnet, daß die Fixiereinrichtung (60) mit einer Sperreinrichtung (110) versehen ist, mit welcher ein Übergang von der den Kugelhals (14) fixierenden Stellung in die den Kugelhals (14) freigebende Stellung lösbar blockierbar ist.

## Claims

1. A towing device for motor vehicles, especially for motor cars, comprising a mounting part (10) in the form of a mounting sleeve (24) that is attachable to the rear of the motor vehicle, a ball neck (14) supporting a coupling ball and provided with an end piece (22) that is insertible into the mounting sleeve (24) in an insertion direction (52) extending transversely to the towing direction (34), whereby the mounting sleeve (24) and the ball neck (14) are provided with co-operating interlocking elements (42, 44, 46, 48) which are adapted to be brought into engagement by the movement in the insertion direction (52) and which, when in this position, form a stop means and a second transverse guide means for the ball neck (14) in the insertion direction (52), and a fixing device (60) with which the ball neck (14) is releasably fixable to the mounting part (10) and which comprises a fixing element (62) moveable between a position wherein the ball neck (14) is released and a position in which the ball neck (14) is fixed to the mounting part (10), wherein the fixing element (62) is moveable by a lever mechanism (60) which comprises a tension element (70) resiliently supported in the longitudinal direction, and wherein an elastic component of force directed parallel to the insertion direction (52) is producable by means of this resiliently supported tension element (70) when the fixing element (62) and the lever mechanism (60) are in the locked position, said component of force maintaining the interlocking elements (42, 44, 46, 48) in position, characterised in that the lever mechanism is a knee lever mechanism (60) and in that the resiliently supported towing element consists of tension bars (70) resilient in the longitudinal direction.

2. A towing device in accordance with Claim 1, characterised in that the fixing device (60) is effective on the interlocking elements (42, 44, 46, 48) by means of a component of force directed transversely to the insertion direction (52).

3. A towing device in accordance with any of the preceding Claims, characterised in that the interlocking elements arranged on the ball neck (14) comprise two projections (42, 44) arranged on opposite sides of the ball neck (14).

4. A towing device in accordance with Claim 3, characterised in that the interlocking elements (42, 44) arranged on the ball neck (14) are formed by end regions of a cross pin (40) extending through the ball neck (14) whereby said end regions protrude laterally from the ball neck (14).

5. A towing device in accordance with any of the preceding Claims, characterised in that the interlocking elements (46, 48) arranged on the mounting sleeve (24) are arranged near an insertion opening (23) for the ball neck (14).

6. A towing device in accordance with any of the preceding Claims, characterised in that the interlocking elements arranged on the mounting sleeve (24) are in the form of recesses (46, 48).

7. A towing device in accordance with any of the preceding Claims, characterised in that the interlocking elements (42, 44, 46, 48) are adapted to engage in substantially play-free manner.

8. A towing device in accordance with any of the preceding Claims, characterised in that the interlocking elements (42, 44, 46, 48) are provided with interlocking faces having an increasingly smaller spacing therebetween in the insertion direction (52).

9. A towing device in accordance with any of the preceding Claims, characterised in that the end piece (22) engageable in the mounting sleeve (24) together with said mounting sleeve (24) form a first transverse guide means (26, 28) which is spaced from the interlocking elements (42, 44, 46, 48), and in that the interlocking elements (42, 44, 46, 48) form the second transverse guide means.

10. A towing device in accordance with any of the preceding Claims, characterised in that the knee lever mechanism (64) is mounted on the ball neck (14).

11. A towing device in accordance with Claim 10, characterised in that the knee lever mechanism (64) is mounted on the ball neck (14) and is pivotal about an axis (100) which extends approximately parallel to a lower surface (41) of the vehicle and is transverse to the direction of travel (34).

12. A towing device in accordance with any of the preceding Claims, characterised in that the knee lever mechanism (64) is held on the ball neck (14) and is pivotal about an axis (100) which traverses a central region of said ball neck (14).

13. A towing device in accordance with any of the preceding Claims, characterised in that the knee lever mechanism (64) is rotatably mounted on the interlocking elements (42, 44) of the ball neck (14).

14. A towing device in accordance with any of the preceding Claims, characterised in that the knee lever mechanism (64) is articulated to a cross pin (40) which engages in corresponding recesses (46, 48) in the mounting sleeve (24) for the purposes of preventing twisting.

15. A towing device in accordance with any of the preceding Claims, characterised in that the knee lever mechanism (64) is located at a position beyond dead centre when in the locked position.

16. A towing device in accordance with any of the preceding Claims, characterised in that the knee lever mechanism (64) comprises a U-shaped mounting part (74) which engages around the ball neck (14) and is mounted thereon.

17. A towing device in accordance with any of the preceding Claims, characterised in that the fixing element (62) is effective exclusively on the mounting sleeve (24).

18. A towing device in accordance with Claim 17, characterised in that the fixing element (62) engages in a support means (66) arranged on the outer cover of the mounting sleeve (24).

19. A towing device in accordance with Claim 18, characterised in that the support means (66) lies radially outward of an inner wall surface (28) of the mounting sleeve (24).

20. A towing device in accordance with any of the preceding Claims, characterised in that the fixing device (60) comprises a manual lever (90) which is moveable in a plane (92) that extends approximately parallel to a plane of curvature (94) of the ball neck (14).

21. A towing device in accordance with any of the preceding Claims, characterised in that the fixing device (60) is provided with a locking device (110) with which a transfer of the ball neck (14) from the fixed position thereof into the released position of the ball neck (14) is releasably blockable.

## Revendications

1. Dispositif d'attelage pour véhicules automobiles, en particulier pour voitures de tourisme, comprenant une pièce de réception (10), qui peut être fixée à l'arrière du véhicule automobile et est agencée sous la forme d'une douille de réception (24), un col de boule (14), qui porte une boule d'attelage et qui comporte une partie d'extrémité (22) qui peut être insérée dans la douille de réception (24) dans un sens d'enfichage (52) qui s'étend transversalement par rapport au sens de traction (34), la douille de réception (24) et le col de boule (14) étant pourvus d'éléments coopérants de liaison par formes complémentaires (42, 44, 46, 48), qui peuvent être amenés à engrener sous l'effet du déplacement dans le sens d'enfichage (52), et forment dans cette position, pour le col de boule (14), une butée dans le sens d'enfichage (52) et un second guide transversal, et un dispositif de fixation (60), au moyen duquel le col de boule (14) peut être fixé de façon amovible à la pièce de réception (10) et qui possède un élément de fixation (62) qui est déplaçable entre une position qui libère le col de boule (14) et une position qui fixe le col de boule (14) sur la pièce de réception (10), et dans lequel l'élément de fixation (62) peut est déplacé par un mécanisme à leviers (60), qui comprend un élément de traction (70) qui est supporté élastiquement dans la direction longitudinale, et dans lequel une composante de force élastique, qui est dirigée parallèlement au sens d'enfichage (52) et maintient en position appliquée les éléments de liaison par formes complémentaires (42, 44, 46, 48), peut être produite au moyen de cet élément de traction (70) supporté élastiquement, avec l'élément de fixation (62) et le mécanisme à leviers (60, dans la position verrouillée, caractérisé en ce que le mécanisme à leviers est un mécanisme à leviers à genouillère et que l'élément de traction supporté élastiquement est constitué par des barres de traction (70) qui sont agencées de manière à être en soi élastiques dans la direction longitudinale.

2. Dispositif d'attelage selon la revendication 1, caractérisé en ce que le dispositif de fixation (60) agit sur les éléments de liaison par formes complémentaires (42, 44, 46, 48) avec une composante de force dirigée transversalement par rapport au sens d'enfichage (52).

3. Dispositif d'attelage selon l'une des revendications précédentes, caractérisé en ce que les éléments de liaison par formes complémentaires disposées sur le col de boule (14) comportent deux parties saillantes (42, 44) qui sont disposées sur des côtés opposés du col de boule (14).

4. Dispositif d'attelage selon la revendication 3, caractérisé en ce que les éléments de liaison par formes complémentaires (42, 44), qui sont disposés sur le col de boule (14) sont formés par des parties d'extrémité latérales, qui font saillie par rapport au col de boule, d'un tourillon transversal (40) qui traverse le col de boule (14).

5. Dispositif d'attelage selon l'une des revendications précédentes, caractérisé en ce que les éléments de liaison par formes complémentaires (46, 48) disposés sur la douille de réception (24) sont disposés à proximité d'une ouverture d'enfichage (23) pour le col de boule (14).

6. Dispositif d'attelage selon l'une des revendications précédentes, caractérisé en ce que les éléments de liaison par formes complémentaires, qui sont disposés sur la douille de réception (24), sont agencés sous la forme d'évidements (46, 48).

7. Dispositif d'attelage selon l'une des revendications précédentes, caractérisé en ce que les éléments de liaison par formes complémentaires, (44, 46, 48) peuvent être amenés à engrener essentiellement sans jeu.

8. Dispositif d'attelage selon l'une des revendications précédentes, caractérisé en ce que les éléments de liaison par formes complémentaires (42, 44, 46, 48) sont pourvus de surfaces de liaison par formes complémentaires qui s'étendent à une distance de plus en plus faible l'une de l'autre, dans le sens d'enfichage (52).

9. Dispositif d'attelage selon l'une des revendications précédentes, caractérisé en ce que la partie d'extrémité (22), qui s'engage dans la douille de réception (24), forme avec la douille de réception (23) un premier guide transversal (26, 28), qui est situé à distance des éléments de liaison par formes complémentaires (42, 44, 46, 48), et que les éléments de liaison par formes complémentaires (42, 44, 46, 48) forment le second guide transversal.

10. Dispositif d'attelage selon l'une des revendications précédentes, caractérisé en ce que le mécanisme à leviers à genouillère (64) est monté tourillonnant sur le col de boule (14).

11. Dispositif d'attelage selon la revendication 10, caractérisé en ce que le mécanisme à leviers à genouillère (64) est monté tourillonnant sur le col de boule (14) de manière à pouvoir pivoter autour d'un axe (100), qui s'étend transversalement par rapport au sens de déplacement (34) et est approximativement parallèle à la face inférieure (41) du véhicule.

12. Dispositif d'attelage selon l'une des revendications précédentes, caractérisé en ce que le mécanisme à leviers à genouillère (64) est retenu sur le col de boule (14) de manière à pouvoir pivoter autour d'un axe (100), qui traverse le col de boule dans une partie centrale de ce dernier.

13. Dispositif d'attelage selon l'une des revendications précédentes, caractérisé en ce que le mécanisme à leviers à genouillère (64) est monté de manière à pouvoir tourner sur les éléments de liaison par formes complémentaires (42, 44) du col de boule (14).

14. Dispositif d'attelage selon l'une des revendications précédentes, caractérisé en ce que le mécanisme à leviers à genouillère (64) est retenu d'une façon articulée sur un tourillon transversal (40), qui s'engage dans la douille de réception (24) qui, pour le blocage en rotation, s'engage dans des évidements correspondants (44, 48) dans la douille de réception (24).

15. Dispositif d'attelage selon l'une des revendications précédentes, caractérisé en ce que dans la position verrouillée, le mécanisme à leviers à genouillère (64) est dans une position de franchissement de point mort.

16. Dispositif d'attelage selon l'une des revendications précédentes, caractérisé en ce que le mécanisme à leviers à genouillère (64) possède une pièce de retenue (74), qui entoure à la manière d'un U le col de boule (14) et est montée tourillonnante sur le col de boule.

17. Dispositif d'attelage selon l'une des revendications précédentes, caractérisé en ce que l'élément de fixation (72) agit exclusivement sur la douille de réception (24).

18. Dispositif d'attelage selon la revendication 17, caractérisé en ce que l'élément de fixation (62) s'engage dans une contrepartie (66) qui est disposée sur le côté formant enveloppe de la douille de réception (24).

19. Dispositif d'attelage selon la revendication 18, caractérisé en ce que la contrepartie (66) est disposée radialement à l'extérieur d'une surface intérieure de paroi (28) de la douille de réception (24).

20. Dispositif d'attelage selon l'une des revendications précédentes, caractérisé en ce que le dispositif de fixation (60) comporte un levier à main (90) qui est déplaçable dans un plan (92) qui est approximativement parallèle à un plan de courbure (94) du col de boule (14).

21. Dispositif d'attelage selon l'une des revendications précédentes, caractérisé en ce que le dispositif de fixation (60) comporte un dispositif de blocage (110), qui permet de bloquer de façon amovible le passage de la position qui fixe le col de boule (14), à la position qui libère le col de boule (14).
